# EUROPEAN PATENT APPLICATION

(11) **EP 4 653 676 A1**
(43) Date of publication of application: **26.11.2025**
(21) Application number: 24780495.8
(22) Date of filing: 27.03.2024
(51) Int. Cl.: F01P 11/10, B60K 5/00, B60K 11/04, B60K 13/02, B60K 13/04, B62D 25/08, B62D 25/10, E01C 19/26, F01P 5/06

(54) **COMPACTION MACHINE**

(30) Priority: 31.03.2023 JP 2023058785; 31.03.2023 JP 2023058786
(71) Applicant: Hitachi Construction Machinery Co., Ltd., Tokyo 110-0015 (JP)
(72) Inventor: SUGAJIMA, Shinya, Higashine-shi, Yamagata 999-3737 (JP); IIDA, Tsutomu, Higashine-shi, Yamagata 999-3737 (JP); HAYASAKA, Yoshinori, Higashine-shi, Yamagata 999-3737 (JP)
(74) Representative: Manitz Finsterwald Patent- und Rechtsanwaltspartnerschaft mbB
(86) International application number: PCT/JP2024/012327
(87) International publication number: WO 2024/204393

(57) **Abstract**

In the tire roller 1A, the heat exchanger 100 is positioned in front of the driver's seat 8 and at the rear of the engine room 70 (equipment installation room), the cooling fan 26f is positioned in front of the heat exchanger 100, the engine 22 (prime mover) is positioned in front of the cooling fan 26f, the hydraulic pump 25 is positioned in front of the engine 22, and the upper surface 72 as a cover is formed to incline diagonally downward from the rear to the front of the engine room 70. This configuration allows the cover (upper surface 72) of the engine room 70 to be inclined diagonally downward from the rear to the front without lowering the mounting position of the heat exchanger 100. As a result, it is possible to suppress the reduction in capacity of the water tank 30 positioned below the engine room 70 and ensure visibility toward the front diagonal lower side of the vehicle body 2.

## Description

### Technical Field

The present invention relates to a compaction machine, particularly to a compaction machine equipped with a water tank for a water spraying device around an equipment installation room where multiple devices are mounted.

### Background Art

Conventionally, technology related to compaction machines equipped with a water tank for a water spraying device around an equipment installation room with multiple devices is known. For example, Patent Document 1 describes a compaction machine (rolling machine) in which a travel engine, heat exchanger, cooling fan unit, and hydraulic pump are housed in an engine room surrounded by a water tank. In this compaction machine, the heat exchanger, cooling fan unit, travel engine, and hydraulic pump are arranged in sequence from the front side to the driver's seat side in the engine room.

### Prior Art Document

### Patent Document

Patent Document 1: Japanese Patent Laid-Open No. 2018-172856

### Summary of the Invention

### Problems to be solved by the Invention

However, generally compared to hydraulic pumps and engines, the taller heat exchanger is placed at the front of the engine room (equipment installation room). Therefore, to avoid obstructing the driver's visibility towards the front diagonal lower side, it is necessary to lower the mounting position of the heat exchanger. As a result, the capacity of the water tank installed below the equipment installation room is limited and reduced.

The present invention has been made in view of such issues, and its objective is to provide a compaction machine that can suppress the reduction in the capacity of the water tank located below the equipment installation room, while ensuring visibility for the driver towards the front diagonally downward side of the vehicle body.

### Means for Solving the Problems

To solve the above problems, the compaction machine of the present invention includes a driver's seat mounted on a vehicle body frame, an equipment installation room positioned around the driver's seat, a cover covering the top of the equipment installation room, and a water tank (for storing water) located below the equipment installation room. Additionally, the equipment installation room is equipped with a hydraulic pump, a prime mover to drive the hydraulic pump, and a cooling device to cool the prime mover. In the aforementioned compaction machine, the cooling device includes a heat exchanger and a cooling fan that generates cooling air flowing from the rear to the front of the equipment installation room. Additionally, in the aforementioned compaction machine, the heat exchanger is positioned at the rear of the equipment installation room, the cooling fan is positioned in front of the heat exchanger, the prime mover is positioned in front of the cooling fan, the hydraulic pump is positioned in front of the prime mover, and the cover is formed to incline diagonally downward from the rear to the front of the equipment installation room.

### Advantageous Effects of the Invention

According to the compaction machine of the present invention, it is possible to provide a compaction machine that suppresses the reduction in the capacity of the water tank located below the equipment installation room while ensuring visibility for the driver towards the front oblique downward side of the vehicle body.

### Brief Description of the Drawings

FIG. 1 is a perspective view showing a tire roller as a compaction machine.
FIG. 2 is a side view showing a tire roller.
FIG. 3 is a plan view showing a tire roller.
FIG. 4 is an exploded perspective view from the front, showing the state where the water tank has been removed from the tire roller.
FIG. 5 is a schematic illustration showing the interior of the engine room.
FIG. 6 is a schematic illustration showing the engine room in a tire roller of a comparative example.
Fig. 7 is a front view of the front panel as seen from the driver's seat side.
Fig. 8 is a perspective view showing the area around the step on the left side.
Fig. 9 is a perspective view showing the area around the step on the right side.
Fig. 10 is a perspective view showing the area around the exhaust port cover.
Fig. 11 is a perspective view of the exhaust port cover as seen from the front and above.
Fig. 12 is a perspective view of the exhaust port cover as seen from the front and below.
Fig. 13 is a side view showing the exhaust port cover.
Fig. 14 is a perspective view showing the vehicle body frame.
Fig. 15 is a perspective view showing the heat exchanger from the driver's seat side.
Fig. 16 is an exploded perspective view showing the heat exchanger from the driver's seat side.
Fig. 17 is an exploded perspective view showing part of the components of the heat exchanger as seen from the side opposite to the driver's seat.
Fig. 18 is a perspective view showing the lower bracket of the heat exchanger.
Fig. 19 is a longitudinal sectional view of the heat exchanger.
Fig. 20 is a side view showing the vicinity of the lower bracket of the heat exchanger.
Fig. 21 is an exploded perspective view showing the state when the radiator core is removed from the heat exchanger frame.

### Mode for Carrying out the Invention

Hereinafter, an embodiment of the present invention will be described with reference to the drawings. In the following description, the longitudinal direction, lateral direction, and vertical direction are defined with the driver on board the vehicle.

### (Tire Roller)

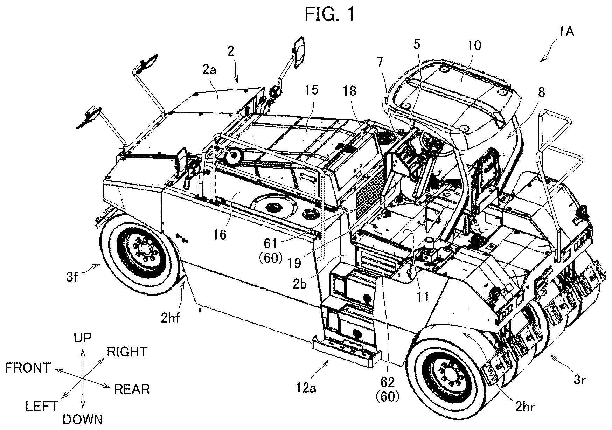

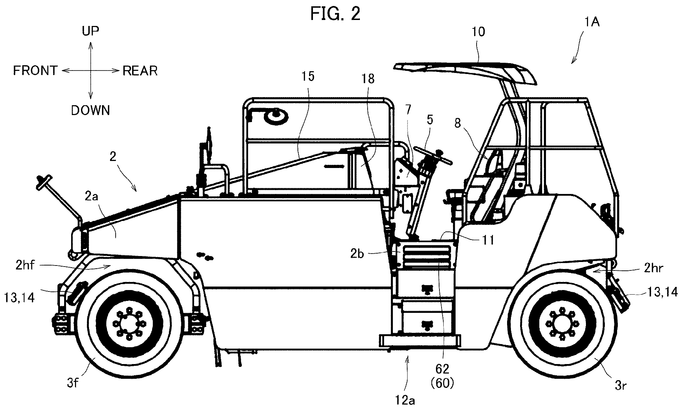

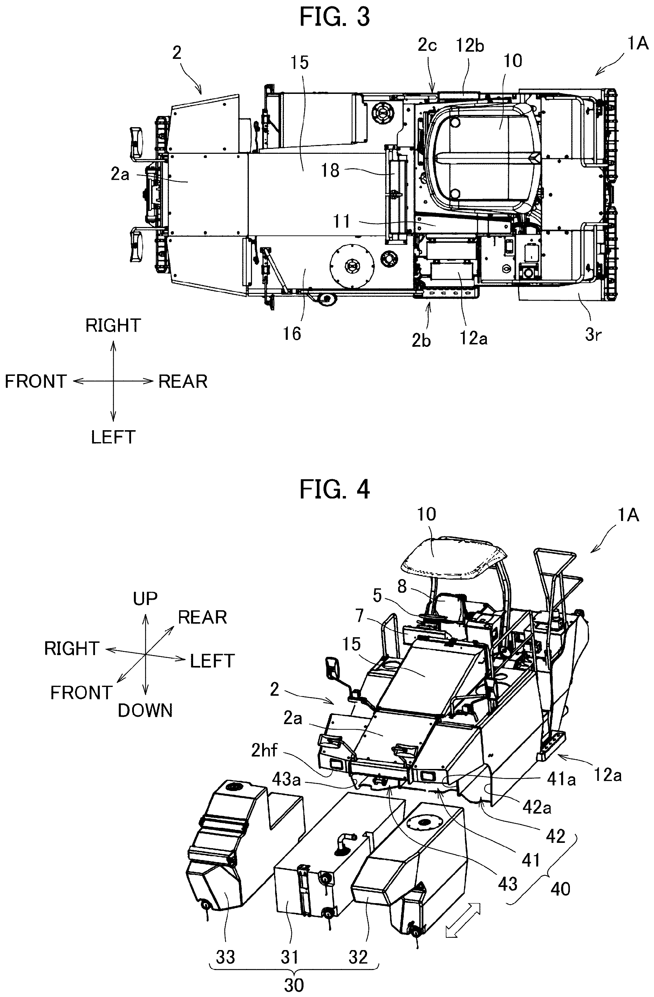

Fig. 1 is a perspective view showing a tire roller as a compaction machine according to an embodiment. Fig. 2 is a side view showing the tire roller. Fig. 3 is a plan view showing the tire roller. The tire roller (compaction machine) 1A shown in Figures 1 to 3 has three rubber front rolling wheels 3f, which also serve as travel wheels, arranged in parallel in the lateral direction at the front of the vehicle body 2 formed by a steel plate vehicle body frame 2a, and are steerably supported via a yoke. Additionally, at the rear of the vehicle body 2, four rubber rear rolling wheels 3r, which also serve as travel wheels, are arranged in parallel in the lateral direction and are supported via an axle (not shown). The front rolling wheels 3f are arranged within the tire house 2hf formed by the vehicle body frame 2a, and the rear rolling wheels 3r are arranged within the tire house 2hr formed by the vehicle body frame 2a.

On the floor 11 formed by the vehicle body frame 2a, an operation console 7 equipped with a steering 5 and a forward-reverse lever (not shown) is installed. Additionally, on the rear side of the operation platform 7, a driver's seat 8 is installed on the right side of the floor 11. Additionally, on the left side 2b of the vehicle body frame 2a adjacent to the floor 11, multiple steps 12a are formed in a stair-like manner. Additionally, on the right side 2c of the vehicle body frame 2a adjacent to the floor 11, multiple steps 12b are formed to project outward in the lateral direction. The driver usually boards from step 12a onto the floor 11, but may also board from step 12b. Directly above the driver's seat 8, a roof 10 is supported via a roof stand. The driver seated in the driver's seat 8 operates the steering 5, the forward-reverse lever, and the pedals on the floor 11 to drive the tire roller 1A. During paving work, the front rolling wheels 3f and rear rolling wheels 3r of the tire roller 1A compact the paving material laid on the road surface.

In the vicinity of the front rolling wheels 3f and rear rolling wheels 3r, a water spraying device 13 and a solvent spraying device 14 are equipped. The water spraying device 13 is connected to a water tank 30 (see Fig. 4) installed inside the vehicle body frame 2a, and the solvent spraying device 14 is connected to a solvent tank (not shown) installed inside the vehicle body frame 2a. During paving operations, to prevent the adhesion of paving materials and mud to the outer surfaces of the front rolling wheel 3f and the rear rolling wheel 3r, water from the water tank is sprayed onto each outer surface by the water spraying device 13, or solvent from the solvent tank is sprayed by the solvent spraying device 14.

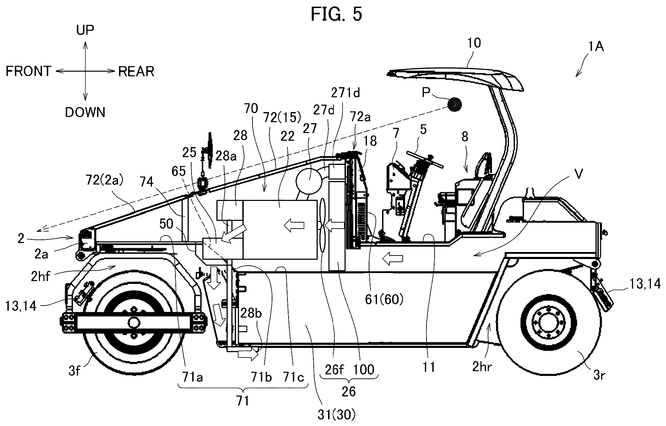

In front of the driver's seat 8 of the vehicle body frame 2a, there is an engine room 70 (equipment installation room, see Fig. 5) equipped with an engine hood 15 that can be opened and closed upward. Additionally, the engine room 70 is equipped with an engine 22 (prime mover), HST (Hydro Static Transmission), and a cooling device 26 for the engine 22 (see Fig. 5). The engine hood 15 is pivotally attached to the vehicle body frame 2a at the front end by hinges, and is configured so that the rear end lifts upward. The configuration of the HST will be briefly described later for general knowledge. The HST is a hydraulic system that drives hydraulic actuators installed in various parts of the vehicle body 2 using hydraulic fluid from the hydraulic pump 25 (first device, see Fig. 5) driven by the engine 22. This HST enables the driving of the rear rolling wheel 3r, steering of the front rolling wheel 3f, and operation of the water spraying device 13 and solvent spraying device 14.

### (Water tank)

Fig. 4 is an exploded perspective view from the front, showing the state where the water tank has been removed from the tire roller. The vehicle body frame 2a forms an installation space 40 that is partitioned to install the water tank 30. The installation space 40 includes the first installation space 41, the second installation space 42, and the third installation space 43, and is installed behind the tire house 2hf where the front rolling wheel 3f is arranged. The first installation space 41, the second installation space 42, and the third installation space 43 each have openings 41a, 42a, and 43a that open facing forward. The first installation space 41 is formed at the lower part of the engine room 70, and its upper surface is shaped to conform to the bottom surface 71 of the engine room 70 (see Fig. 5). The second installation space 42 is provided adjacent to the left of the first installation space 41 and extends to the left side of the engine room 70. The third installation space 43 is provided adjacent to the right of the first installation space 41 and extends to the right side of the engine room 70.

The water tank 30 includes a first tank 31, a second tank 32, and a third tank 33, and is installed within the aforementioned installation space 40. Each water tank 30 is formed separately from the vehicle body frame 2a using a resin material, and is connected to each other with multiple pipes (not shown) as well as connected to the water spraying device 13. The first tank 31 is shaped along the first installation space 41 and is designed to be insertable and removable (detachable) within the first installation space 41 along the longitudinal direction via the opening 41a. The second tank 32 is shaped along the second installation space 42 and can be inserted and removed in the longitudinal direction within the second installation space 42 through the opening 42a. The third tank 33 is shaped along the third installation space 43 and can be inserted and removed in the longitudinal direction within the third installation space 43 through the opening 43a.

### (Engine Room)

Next, the configuration of the engine room 70 will be described. Fig. 5 is an illustrative diagram schematically showing the interior of the engine room 70. The engine room 70 is provided at the central part in the lateral direction of the vehicle body 2, and Fig. 5 shows a cross-section of the vehicle body frame 2a cut at the central part in the lateral direction to make the interior of the engine room 70 visible. The engine room 70 is defined by a bottom surface 71 formed by the vehicle body frame 2a, a top surface 72 formed by the vehicle body frame 2a and an openable engine hood 15, and a front panel 18 provided at the front of the driver's seat 8. The top surface 72 serves as a cover that covers the upper part of the engine room 70. The interior of the engine room 70 is appropriately partitioned by a partition plate 74 and the like attached in front of the hydraulic pump 25. Additionally, on the left side of the engine room 70, as shown in Figures 1 to 4, a footing 16 is formed for workers to perform maintenance and other tasks on the equipment arranged within the engine room 70.

As shown in Fig. 5, the bottom surface 71 of the engine room 70 includes a first bottom surface section 71a extending horizontally in the longitudinal direction, a second bottom surface section 71b extending downward as it moves rearward from the first bottom surface section 71a, and a third bottom surface section 71c extending horizontally rearward from the second bottom surface section 71b. The aforementioned first installation space 41 and first tank 31 are provided at the lower part of the third bottom surface section 71c of the bottom surface 71, with their upper surface extending along the third bottom surface section 71c. Additionally, the upper surface 72 of the engine room 70 is formed such that the rear end 72a on the driver's seat 8 side of the engine hood 15, which forms the upper surface 72 of the engine room 70, is positioned below the eye point P of the driver seated in the driver's seat 8, and extends downward as it moves forward from this rear end 72a. In other words, the upper surface 72 is formed to incline diagonally downward from the rear to the front of the engine room 70. This ensures visibility for the driver towards the front diagonal downward side of the vehicle body 2, as indicated by the dashed arrows in the figure.

### (Equipment in the Engine Room)

A description of multiple devices mounted within the engine room 70 is provided. As shown in Fig. 5, the engine room 70 is equipped with multiple devices, including the aforementioned engine 22 and hydraulic pump 25, as well as a cooling device 26. The cooling device 26 includes a heat exchanger 100 and a cooling fan 26f. The heat exchanger 100 includes a radiator that cools the cooling water of the engine 22 by exchanging heat with air drawn into the engine room 70 by the cooling fan 26f, and an oil cooler that cools the oil of the engine 22 by exchanging heat with the air. The cooling fan 26f generates cooling air that flows from the rear to the front of the engine room 70. The heat exchanger 100 may also be equipped with an intercooler for cooling the charged air. The cooling fan 26f is positioned between the heat exchanger 100 and the engine 22 and is driven by the power of the engine 22.

The engine 22, hydraulic pump 25, and cooling device 26 are fixed to the vehicle body frame 2a of the engine room 70 via a fixing part (not shown). The engine 22, hydraulic pump 25, and heat exchanger 100, when mounted within the engine room 70, have their overall height in the order of heat exchanger 100, engine 22, and hydraulic pump 25. Additionally, the cooling fan 26f has a lower overall height than the engine 22 and heat exchanger 100.

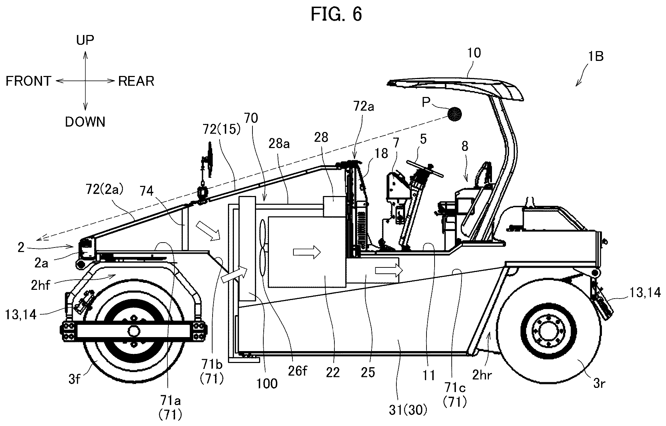

Here, Fig. 6 is an explanatory diagram schematically showing the interior of the engine room 70 in a comparative example of the tire roller 1B. In the comparative example of the tire roller 1B, the engine 22, hydraulic pump 25, and heat exchanger 100 are arranged in the order of hydraulic pump 25, engine 22, and heat exchanger 100 from the driver's seat 8 side to the front side within the engine room 70. In this configuration, as illustrated, if the third bottom surface section 71c is not formed to extend diagonally downward from the driver's seat 8 side to the front side, each device (especially the heat exchanger 100 with a high overall height) will be positioned above the upper surface 72 of the engine room 70. In other words, for the comparative example of the tire roller 1B shown in Fig. 6, if the third bottom surface section 71c is horizontally formed while positioned near the lower surface of the engine 22, the upper surface 72 cannot be formed to extend diagonally downward from the driver's seat 8 side to the front side. As a result, it becomes difficult to ensure visibility for the driver towards the front diagonal downward side.

On the other hand, if the third bottom surface section 71c shown in Fig. 6 is applied to the tire roller 1B in a shape extending diagonally downward from the driver's seat 8 side to the front side, the first installation space 41 and the first tank 31 must also be shaped along the third bottom surface section 71c. Therefore, since the rear end of the first tank 31 becomes larger than the opening 41a at the front end of the first installation space 41, the first tank 31 cannot be inserted or removed from the first installation space 41 through the opening 41a. The first tank 31 is positioned at the central part in the lateral direction of the vehicle body 2, making it difficult to insert or remove it from the vehicle body frame 2a from the side. Additionally, on the tire house 2hf side, if the front rolling wheel 3f is removed, the first tank 31 can be inserted or removed from the first installation space 41 through the opening 41a. However, since a travel motor and axle (not shown) are positioned within the tire house 2hr where the rear rolling wheel 3r is located, it is not preferable to insert or remove the first tank 31 from the vehicle body frame 2a from the tire house 2hr side. As a result, the internal space of the steel vehicle body frame 2a itself must be used as a water tank, making it difficult to ensure the rust resistance of the water tank.

Therefore, in the tire roller 1A of this embodiment, as shown in Fig. 5, the engine 22, hydraulic pump 25, and heat exchanger 100 are arranged within the engine room 70 in the order of decreasing overall height from the driver's seat 8 side to the front side. More specifically, the heat exchanger 100 is positioned at the front of the driver's seat 8 and at the rear of the engine room 70, the cooling fan 26f is positioned in front of the heat exchanger 100, the engine 22 is positioned in front of the cooling fan 26f, and the hydraulic pump 25 is positioned in front of the engine 22. The hydraulic pump 25, which is positioned most forward among the devices, partially exposes itself to the outside of the vehicle body frame 2a through the exhaust port 65 formed in the second bottom surface section 71b. This allows for the miniaturization of the vehicle body frame 2a forming the engine room 70. In other words, the installation space for the devices can be expanded without enlarging the vehicle body frame 2a.

With this configuration, even if the third bottom surface section 71c is formed horizontally and the upper surface 72 of the engine room 70 is shaped to extend diagonally downward from the driver's seat 8 side to the front side, none of the devices will be positioned above the upper surface 72. As a result, the first installation space 41 and the first tank 31 can be shaped to extend horizontally like the third bottom surface section 71c, allowing the first tank 31 to be inserted or removed from the first installation space 41 through the opening 41a at the front end of the first installation space 41. Therefore, it becomes possible to use a separate resin tank as the first tank 31, apart from the vehicle body frame 2a. Additionally, as mentioned above, visibility for the driver towards the front diagonal downward side can also be ensured.

### (Air Cleaner)

Additionally, in this embodiment, the engine room 70 is equipped with an air cleaner 27 that purifies the air supplied to the engine 22, connected to the intake side of the engine 22, and an intake duct 27d with one end connected to the air cleaner 27 and the other end forming the engine intake port 271d. The air cleaner 27 is positioned above the engine 22 and cooling fan 26f, in front of the heat exchanger 100. As shown in Fig. 5, since the engine 22 and cooling fan 26f have a lower overall height than the heat exchanger 100, surplus space is formed between the engine 22 and cooling fan 26f and the upper surface 72 of the engine room 70. By positioning the main body 27a of the air cleaner 27 in this surplus space, effective utilization of space within the engine room 70 can be achieved. In particular, compared to positioning the air cleaner 27 on the side of the engine 22, the side space of the engine 22 can be secured. As a result, in this embodiment's configuration that the engine room 70 is positioned at the central part in the lateral direction of the vehicle body 2, and the second tank 32 and third tank 33 to be positioned on the side of the engine room 70, sufficient space for positioning the water tank 30 is ensured, and the capacity of the water tank 30 can be adequately secured.

Additionally, the engine intake port 271d of the intake duct 27d is positioned within the engine room 70, behind the front of the heat exchanger 100. More specifically, the engine intake port 271d is positioned at the top of the heat exchanger 100, and a section of the air within the engine room 70 is supplied to the air cleaner 27 from the engine intake port 271d. Therefore, air is supplied to the air cleaner 27 from the upstream side of the air outlet of the heat exchanger 100 in the direction of air flow within the engine room 70 (see the white arrows in Fig. 5). This prevents the air cleaner 27 from drawing in air that has been heated by exchanging heat with the cooling water or oil of the engine 22 in the heat exchanger 100. As a result, the operational efficiency of the engine 22 can be improved.

Additionally, the air cleaner 27 and engine intake port 271d are positioned above the maintenance footing 16 (see Fig. 1 and Fig. 3). This allows a worker on the footing 16 to easily access the air cleaner 27 when the engine hood 15 is opened, improving the efficiency of maintenance work.

### (Aftertreatment Device)

Additionally, the engine 22 is equipped with an aftertreatment device 28 for purifying exhaust, and an exhaust pipe 28a with one end connected to the aftertreatment device 28 and the other end forming the engine exhaust port 28b. The aftertreatment device 28 is positioned on the front side of the engine 22. Additionally, the engine room 70 has an exhaust port 65 as a through hole positioned in front of the engine 22. The exhaust pipe 28a of the aftertreatment device 28 extends downward through this exhaust port 65 to the outside of the engine room 70, and further extends along the lower surface of the vehicle body frame 2a. On the other hand, as in the comparative example of tire roller 1B shown in Fig. 6, when the hydraulic pump 25, engine 22, and heat exchanger 100 are arranged in sequence from the driver's seat 8 side to the front side within the engine room 70, the exhaust pipe 28a extending from the aftertreatment device 28 becomes longer. In this embodiment, the length of the exhaust pipe 28a of the aftertreatment device 28 can be shortened, thereby improving yield and safety. Furthermore, compared to when the aftertreatment device 28 is on the driver's seat 8 side, it is possible to reduce hot air and noise near the driver's seat 8.

### (Intake and exhaust structure of the cooling device)

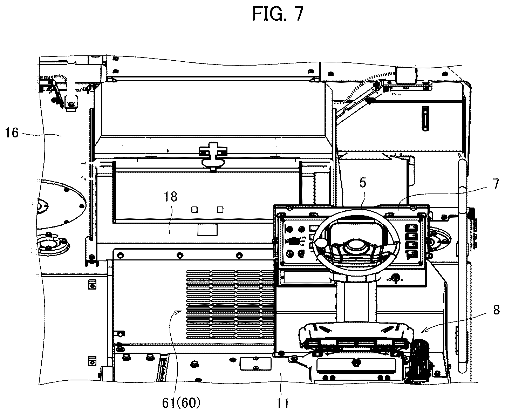

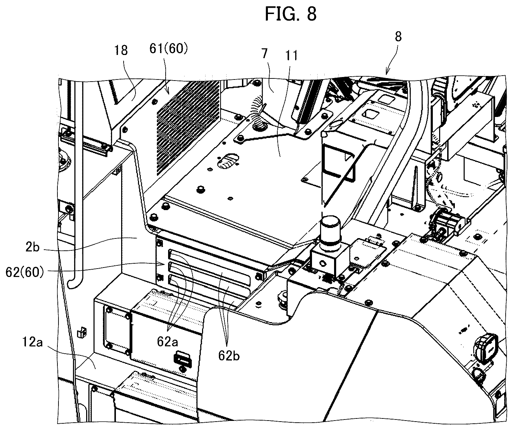

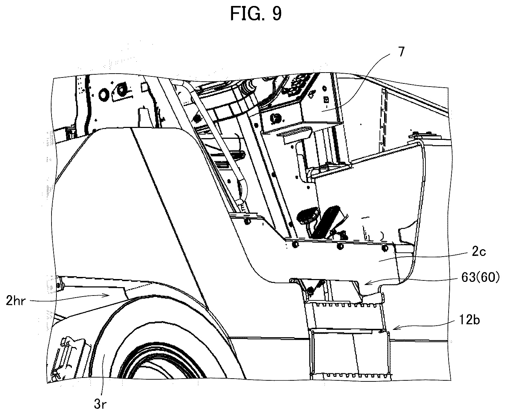

Next, the intake and exhaust structure of the cooling device 26 will be described. Fig. 7 is a front view of the front panel 18 as seen from the driver's seat 8 side. Fig. 8 is a perspective view showing the area around step 12a on the left side 2b. Fig. 9 is a perspective view showing the area around step 12b on the right side 2c. As shown, the tire roller 1A is provided with multiple (in this embodiment, three) intake ports 60 for conducting intake to the cooling device 26. The intake ports 60 include a first intake port 61 (intake port), a second intake port 62, and a third intake port 63.

As shown in FIGS. 1, 5, 7, and 8, the first intake port 61 is provided at the lower part of the front panel 18, communicates with the engine room 70, and draws air into the engine room 70 from outside the vehicle body frame 2a by the drive of the cooling fan 26f. A grid-like cover is attached to the first intake port 61. The first intake port 61 extends vertically along the front panel 18, thereby suppressing the intrusion of foreign matter into the first intake port 61. Also, as shown in FIG. 1, a shielding plate 19 is installed between the first intake port 61 and the driver's seat 8. The shielding plate 19 is attached on the vehicle body frame 2a, spaced apart from the first intake port 61 in the longitudinal direction, extending leftward at the lower part of the control platform 7, and covers at least a part of the first intake port 61 in the longitudinal direction. This allows for the prevention of interference between the driver's feet and the first air intake 61 when seated in the driver's seat 8, while not obstructing the intake by the first air intake 61. Note that the description of the shielding plate 19 is omitted in FIGS. 7 and 8.

As shown in FIG. 8, the second intake port 62 is formed on the left side 2b of the vehicle body frame 2a. Outside the vehicle body frame 2a from the second intake port 62, a step 12a is provided as described above. The second intake port 62 has multiple air holes 62a extending in the longitudinal direction, and communicate with the engine room 70 through a space V (see FIG. 5) extending below the floor 11 from each air hole 62a. The left side 2b of the vehicle body frame 2a is formed to extend vertically, and each air hole 62a also extends vertically. Additionally, a guide vane 62b extending leftward (outward in the vehicle width direction) and downward is attached to the upper edge of each air hole 62a.

As shown in FIG. 9, the third intake port 63 is formed on the right side 2c of the vehicle body frame 2a. Outside the vehicle body frame 2a from the third intake port 63, a step 12b is provided as described above. The third intake port 63 communicates with the engine room 70 through a space V (see FIG. 5) extending below the floor 11, similar to the second intake port 62. The left side 2b of the vehicle body frame 2a is formed to extend vertically, thereby allowing the third intake port 63 to also extend vertically.

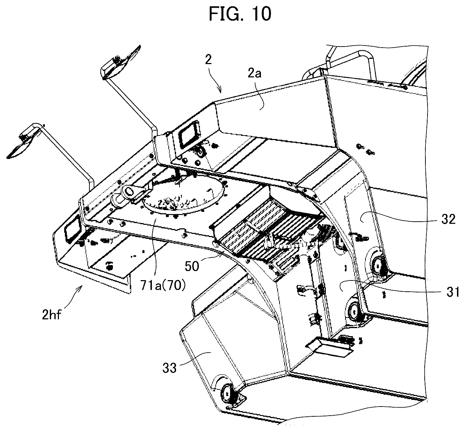

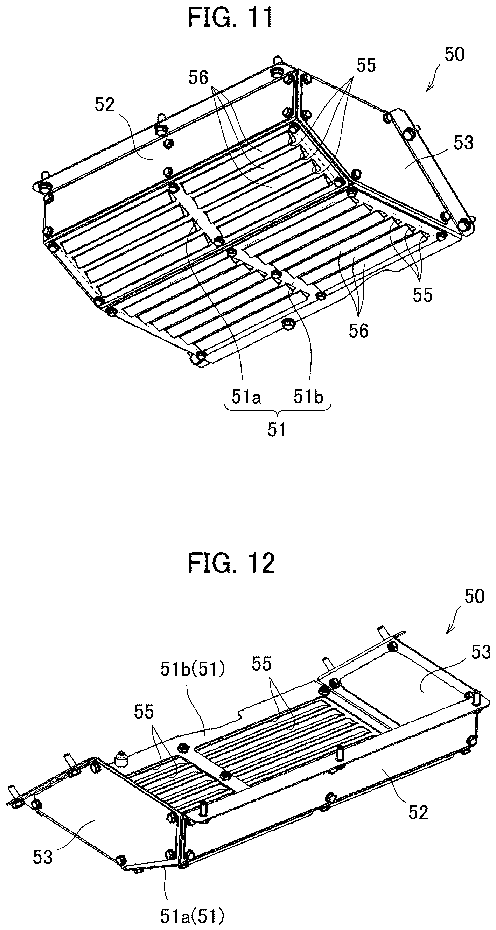

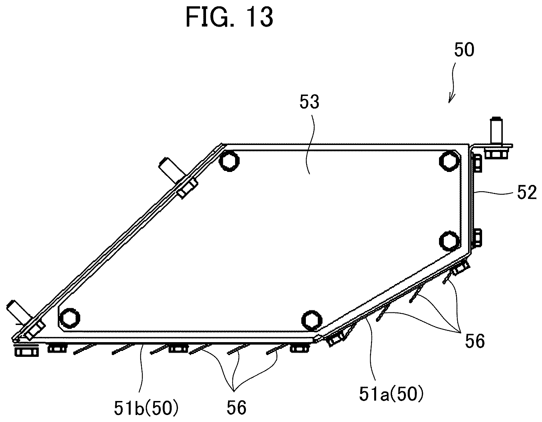

As shown in FIG. 5, the exhaust port 65 is formed in the second bottom section 71b. The vehicle body frame 2a is equipped with an exhaust port cover 50 that covers the part exposed outside the vehicle body frame 2a from the exhaust port 65 of the hydraulic pump 25, protecting the hydraulic pump 25 and suppressing the intrusion of foreign matter from the exhaust port 65. FIG. 10 is a perspective view showing the area around the exhaust port cover 50. FIG. 11 is a perspective view of the exhaust port cover 50 viewed from the front and below. FIG. 12 is a perspective view of the exhaust port cover 50 viewed from the front and above. FIG. 13 is a side view showing the exhaust port cover 50.

The exhaust port cover 50 is formed, for example, from a steel plate and is fixed to the vehicle body frame 2a by fasteners such as bolts and nuts. The exhaust port 65 and exhaust port cover 50 of this embodiment are arranged behind the front rolling wheel 3f, as shown in FIG. 5. Note that the exhaust port 65 and exhaust port cover 50 are not limited to being arranged behind the rear end of the front rolling wheel 3f, but may also be positioned to overlap with the front rolling wheel 3f when viewed from the vertical direction. As shown in FIGS. 10 to 13, the exhaust port cover 50 includes a lower surface part 51, a front surface part 52, and a pair of left and right side surface parts 53 extending between the lower surface part 51 and the front surface part 52. The lower surface part 51 has an inclined surface part 51a extending rearward from the front surface part 52 downward, and a bottom surface part 51b extending rearward from the inclined surface part 51a. The lower surface part 51, consisting of the inclined surface part 51a and the bottom surface part 51b, has multiple air holes 55 extending in the lateral direction, communicating between the outside of the vehicle body frame 2a and the inside of the engine room 70. Furthermore, a guide vane 56 extending rearward and downward is extended from the upper edge of each air hole 55. Note that the air holes 55 may also be formed in the front surface part 52 and the pair of side surface parts 53.

With the above configuration, when the cooling fan 26f of the cooling device 26 rotates, air is drawn into the engine room 70 from the first intake port 61, and air is also drawn into the engine room 70 from the second intake port 62 and the third intake port 63 through the space below the floor 11. This ensures a sufficient intake volume into the engine room 70. The drawn air flows forward within the engine room 70, as indicated by the white arrows in FIG. 5, passes through the heat exchanger 100 and the engine 22, and is exhausted to the outside of the vehicle body frame 2a through the multiple air holes 55 of the exhaust port 65 and the exhaust port cover 50. The exhausted air further flows downward along the vehicle body frame 2a behind the front rolling wheel 3f.

Here, in the comparative example of the tire roller 1B shown in Figure 6, as illustrated by the white arrows indicating the direction of airflow in the figure, the heat exchanger 100 is positioned in front of the engine 22. Consequently, an air intake is formed on the upper surface of the vehicle body frame 2a and the surface (second bottom surface section 71b) where the tire house 2hf is formed. As a result, foreign matter such as rain from the intake ports formed on the upper surface, water from the water spraying device 13 or solvent from the solvent spraying device 14 from the intake ports formed on the lower surface, and mud splashed by the front rolling wheel 3f may enter the vehicle body frame 2a. In the tire roller 1A of this embodiment, since intake ports are not formed on the upper or lower surface of the vehicle body frame 2a, it is possible to suppress the intrusion of foreign matter such as rain into the vehicle body frame 2a from each intake port 60. Particularly, in this embodiment, the first intake port 61, the second intake port 62, and the third intake port 63 are all formed on surfaces extending in the vertical direction. Furthermore, the multiple air holes 62a of the second intake port 62 are attached with guide vanes 62b. This allows for better suppression of foreign matter intrusion from each intake port 60.

Also, as in the comparative example of the tire roller 1B, if the air heated by passing through the heat exchanger 100 and the engine 22 flows to the rear side (driver's seat 8 side), hot air may be transmitted near the driver's seat 8, causing the driver to feel hot. In the tire roller 1A of this embodiment, since the air flows forward within the engine room 70, it is possible to suppress the transmission of hot air near the driver's seat 8.

Furthermore, in the comparative example of tire roller 1B, it is difficult to supply air, which is taken in from the upper and lower surfaces of the vehicle body frame 2a, directly to the cooling fan 26f. This may lead to a decrease in the cooling efficiency of the heat exchanger 100 or an increase in noise from the cooling fan 26f. In the tire roller 1A of this embodiment, since the first air intake 61 is provided in the front panel 18, which is arranged facing the heat exchanger 100 and the cooling fan 26f, it is possible to supply air directly to the cooling fan 26f. As a result, it is possible to improve the cooling efficiency by the heat exchanger 100 and reduce the noise by the cooling fan 26f.

Additionally, even if an exhaust port 65 is provided on the lower surface (second bottom section 71b) of the vehicle body frame 2a forming the tire house 2hf, the exhaust port cover 50 can prevent foreign substances such as water from the water spraying device 13, solvent from the solvent spraying device 14, and mud splashed by the front rolling wheel 3f from entering the engine room 70 through the exhaust port 65. Moreover, the flow of air exhausted from the exhaust port 65 sends the foreign substances downward, thereby more effectively preventing the foreign substances from clogging the air holes 55 of the exhaust port cover 50 or entering the vehicle body frame 2a through the exhaust port 65.

Furthermore, the exhaust port 65 and the exhaust port cover 50 are positioned behind the front rolling wheel 3f, and a guide vane 56 is attached on the upper edge of each air hole 55. This makes it possible to further effectively prevent clogging of the air hole 55 by the aforementioned foreign matter and the intrusion of the foreign matter into the vehicle body frame 2a.

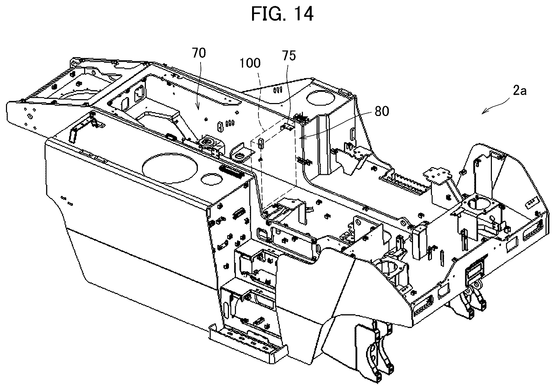

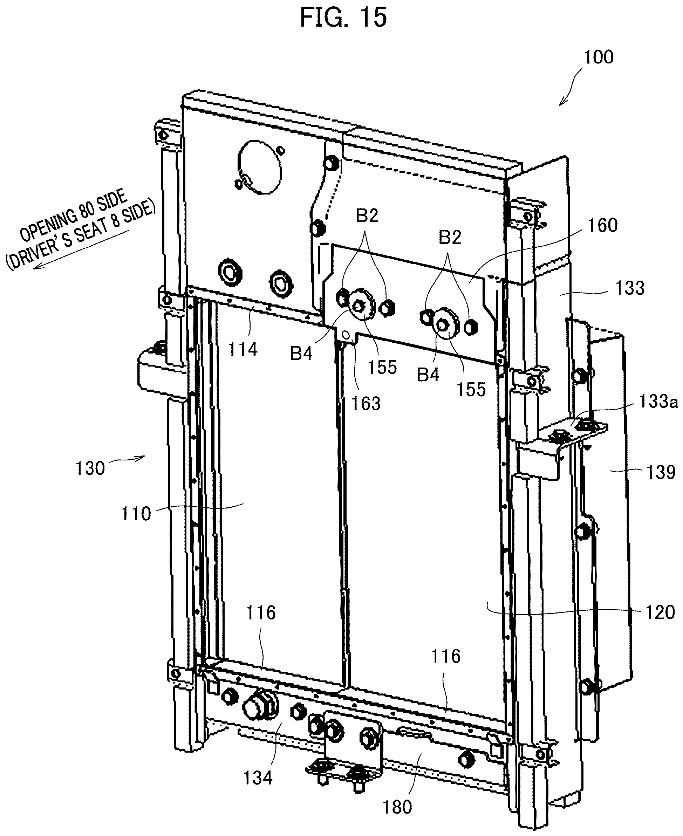

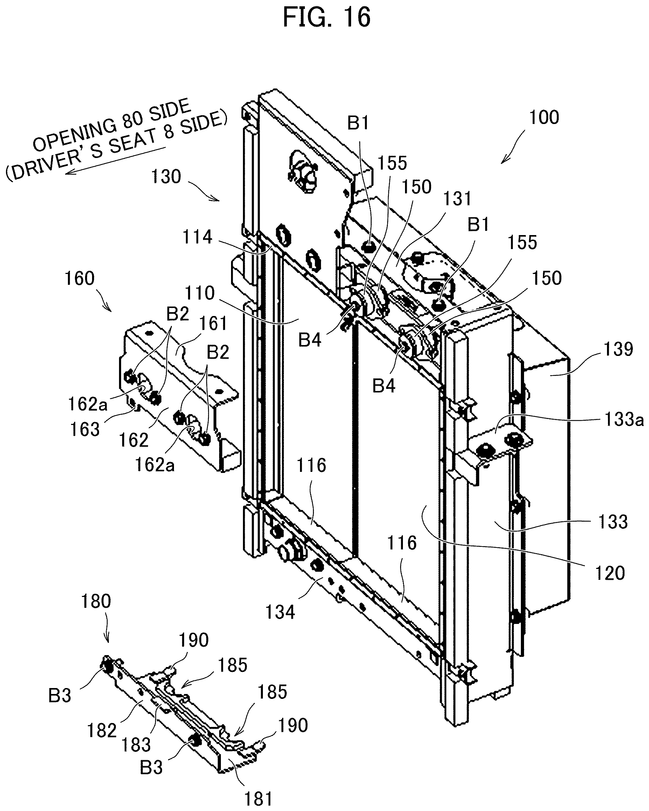

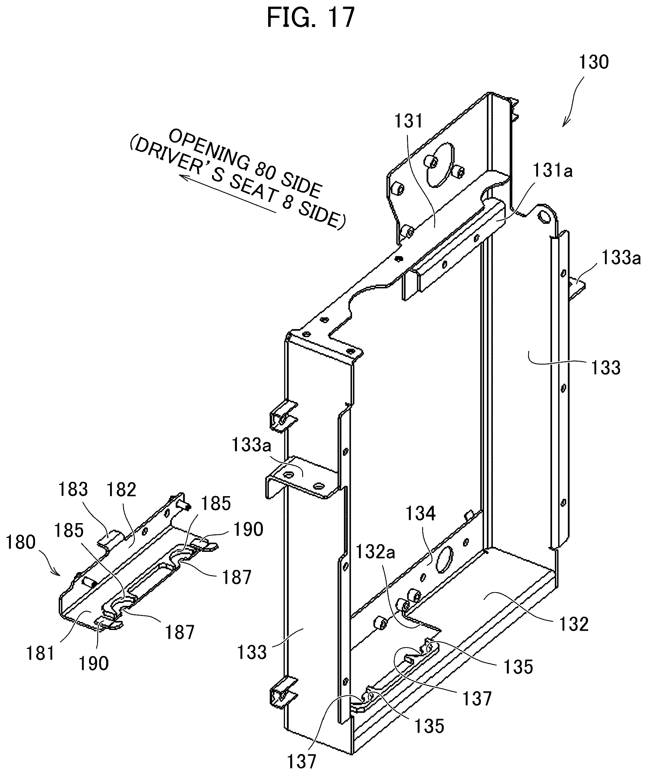

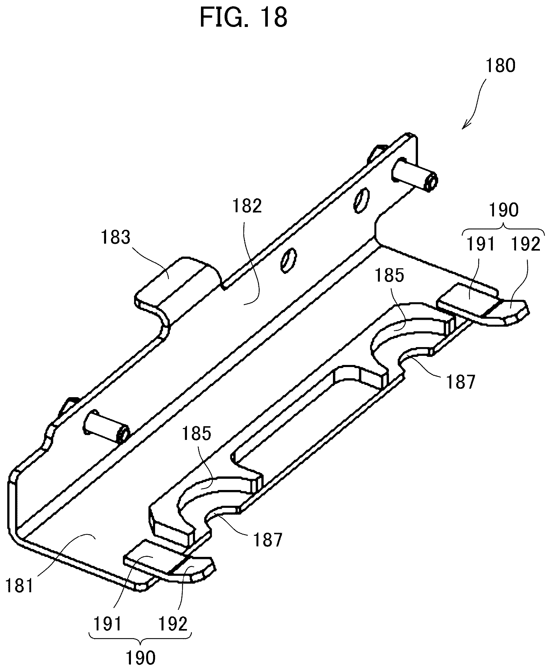

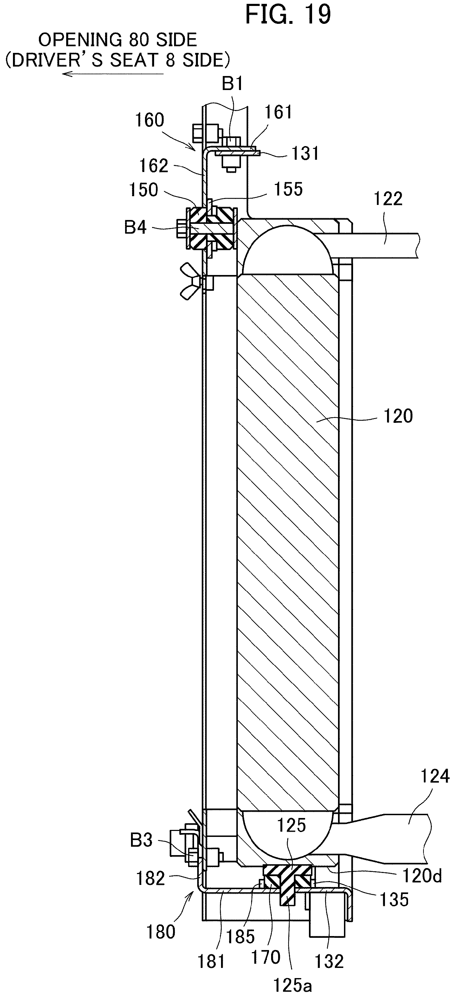

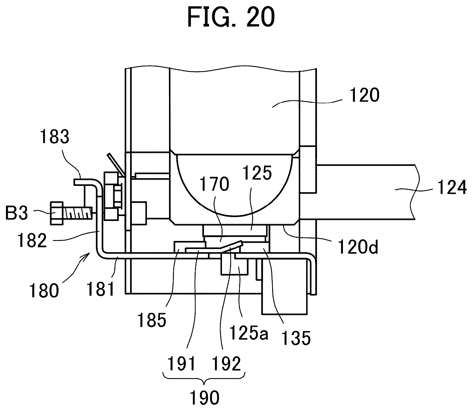

Next, the structure of the heat exchanger 100 and its mounting structure on the vehicle body frame 2a will be described. Figure 14 is a perspective view showing the vehicle body frame 2a. Figure 15 is a perspective view of the heat exchanger 100 as seen from the driver's seat 8 side. Figure 16 is an exploded perspective view of the heat exchanger 100 as seen from the driver's seat 8 side. Figure 17 is an exploded perspective view of some components of the heat exchanger 100 as seen from the side opposite to the driver's seat 8. Figure 18 is a perspective view showing the lower bracket of the heat exchanger 100. Figure 19 is a longitudinal sectional view of the heat exchanger 100. Figure 20 is a side view of the vicinity of the lower bracket of the heat exchanger 100 as seen from the lateral side in the lateral direction.

As shown in Figure 14, an opening 80 accessible to workers is formed at the rear of the engine room 70 in the vehicle body frame 2a. The opening 80 connects the inside and outside of the engine room 70 by exposing it to face the driver's seat 8 side (rear side) after removing components such as the front panel 18 (see Fig. 1) installed in front of the driver's seat 8. Additionally, the vehicle body frame 2a defining the engine room 70 is formed with multiple fixing sections 75 for securing the heat exchanger 100 by bolting.

### (Heat Exchanger)

The heat exchanger 100, as shown in Figures 15 to 20, includes an oil cooler 110, a radiator core 120 (core), and a heat exchanger frame 130, and is arranged facing the opening 80 (see the dashed line in Figure 14). The oil cooler 110 is connected to a hydraulic circuit through a hose (not shown) where hydraulic fluid flows to drive the hydraulic actuator, allowing heat exchange between the air drawn in by the cooling fan 26f and the hydraulic fluid. The radiator core 120 is arranged at the rear of the engine room 70 facing the opening 80. The radiator core 120 is connected to a line through which the cooling water of the engine 22 flows via hoses 122, 124 (see Figure 19), allowing heat exchange between the air sucked by the cooling fan 26f and the cooling water. The hoses 122, 124 are attached to the surface of the radiator core 120 on the engine 22 side (opposite to the opening 80) to minimize their length.

The heat exchanger frame 130, as shown in Figures 16 and 17, is a frame-like member including an upper plate section 131, a bottom plate section 132, a pair of side plate sections 133, and a core holding section 134. Inside the heat exchanger frame 130, the radiator core 120 and the oil cooler 110 are mounted side by side along the lateral direction. In this embodiment, the oil cooler 110 is positioned in the left half of the heat exchanger frame 130 as viewed from the driver's seat 8 side, i.e., the opening 80 side. The radiator core 120 is positioned in the right half of the heat exchanger frame 130 as viewed from the opening 80 side.

The upper plate section 131 is formed in an L-shape as viewed from the vertical direction. On the left half side of the upper plate section 131, a mounting section 131a for the oil cooler 110 is provided. The bottom plate section 132 is arranged opposite to the upper plate section 131. On the right half side of the bottom plate section 132, a notch 132a is formed, cutting out a part where the radiator core 120 is positioned. The pair of side plate sections 133 are connected to the upper plate section 131 and the bottom plate section 132. Each side plate section 133 is provided with a mounting section 133a that is fastened to the fixing section 75 of the vehicle body frame 2a. Additionally, each side plate section 133 is fitted with a fan frame 139 that installs the cooling fan 26f positioned on the side opposite to the driver's seat 8 relative to the heat exchanger frame 130. The core holding section 134 extends upward from the end of the bottom plate section 132 on the driver's seat 8 side (opening 80 side). The core holding section 134 is also connected to the pair of side plate sections 133.

As configured above, the oil cooler 110 makes contact with the mounting section 131a of the upper plate section 131 and also makes contact with the core holding section 134 via a spacer 116, and is fastened to the mounting section 131a and the core holding section 134 with bolts and nuts. On the other hand, the radiator core 120 is mounted to the heat exchanger frame 130 via vibration-damping rubber to enhance vibration-damping performance.

Here, in the embodiment of tire roller 1A, unlike the comparative example of tire roller 1B shown in FIG. 6, the heat exchanger 100 is positioned on the driver's seat side. Therefore, the heat exchanger 100 cannot be accessed from the underside (bottom surface 71) of the vehicle body frame 2a where the tire house 2hf is formed. Additionally, because the water tank 30 is positioned on both sides and below the engine room 70, it is also not possible to access the heat exchanger 100 from the side or directly below the heat exchanger 100. In this embodiment, the mounting structure of the radiator core 120, which is particularly mounted to the heat exchanger frame 130 via vibration-damping rubber, is designed to allow easy attachment and detachment from the heat exchanger frame 130 as follows.

### (Radiator Core Mounting Structure)

The heat exchanger 100 in this embodiment includes, as the mounting structure for the radiator core 120, as shown in FIGS. 15 to 20, a bracket that is detachably mounted to the heat exchanger frame 130, and vibration-damping rubber supported by the bracket. More specifically, the vibration-damping rubber includes upper vibration-damping rubber 150 and lower vibration-damping rubber 170, and the bracket includes an upper bracket 160 and a lower bracket 180.

### (Upper Vibration-Damping Rubber)

The upper vibration-damping rubber 150, as shown in FIGS. 16 and 19, is cylindrical vibration-damping rubber, mounted at the top of the surface on the opening 80 side of the radiator core 120, with its axis extending in the longitudinal direction, primarily absorbing vibrations in the longitudinal direction. Two upper vibration-damping rubbers 150 are mounted spaced apart in the lateral direction relative to the radiator core 120. Each upper vibration-damping rubber 150 has a bolt B4 inserted along the longitudinal direction, and the bolt B4 is fastened to the top of the radiator core 120, thereby securing it to the radiator core 120. Additionally, a holding member 155 for attaching the upper vibration-damping rubber 150 to the upper bracket 160 is fitted on the outer periphery of the upper vibration-damping rubber 150. The holding member 155 is formed in a roughly rhombic shape, protruding from both sides of the upper vibration-damping rubber 150 in the lateral direction, with bolt fastening holes provided at both ends in the lateral direction.

### (Upper Bracket)

The upper bracket 160, as shown in FIGS. 16 and 19, is an L-shaped member having a top surface section 161 extending in the longitudinal direction and a standing wall section 162 extending downward from the end of the top surface section 161 on the opening 80 side. The upper bracket 160, as shown in FIG. 19, is arranged such that the top surface section 161 makes contact with the upper plate section 131 of the heat exchanger frame 130 in the vertical direction, and the standing wall section 162 makes contact with the holding member 155 attached to the upper vibration-damping rubber 150 in the longitudinal direction. Additionally, the standing wall section 162 has support holes 162a formed to support the outer periphery of each upper vibration-damping rubber 150, as shown in FIG. 16.

The upper bracket 160 is fastened to the upper plate section 131 of the heat exchanger frame 130 via bolt B1 (see FIGS. 16 and 19) and is also fastened to the holding member 155 attached to the upper vibration-damping rubber 150 via bolt B2 (see FIGS. 15 and 16). Additionally, a frame member 114 is attached to the surface on the opening 80 side of the heat exchanger frame 130, as shown in FIGS. 15 and 16, and the upper bracket 160 is also fastened to the frame member 114 at the fixing section 163 formed on the lower edge of the standing wall section 162. Thus, the upper bracket 160 supports the radiator core 120 against the heat exchanger frame 130 via the upper vibration-damping rubber 150.

### (Lower Vibration-Damping Rubber)

As shown in FIGS. 19 and 20, the lower vibration-damping rubber 170 is cylindrical vibration-damping rubber, provided between the lower part of the radiator core 120 and the heat exchanger frame 130, with its axis extending in the vertical direction, primarily absorbing vibrations in the vertical direction. FIGS. 19 and 20 illustrate only one of the lower vibration-damping rubbers 170, but two lower vibration-damping rubbers 170 are provided spaced apart in the lateral direction. A fixing member 125 with a pin 125a extending downward at the position where the lower vibration-damping rubber 170 is arranged is attached to the lower surface 120d of the radiator core 120, and the lower vibration-damping rubber 170 is inserted into the fixing member 125. The lower vibration-damping rubber 170 is supported by the bottom plate section 132 of the heat exchanger frame 130 and the lower bracket 180.

### (Bottom Plate Section of Heat Exchanger Frame)

As shown in FIG. 19, the radiator core 120 is arranged such that the fixing member 125 and the lower vibration-damping rubber 170 attached to the lower surface 120d are positioned within the notch 132a (see FIG. 17) of the bottom plate section 132. Then, the bottom plate section 132 of the heat exchanger frame 130 makes contact with the lower surface of the lower vibration-damping rubber 170 and supports the radiator core 120 from below via the lower vibration-damping rubber 170. Additionally, as shown in FIG. 17, two contact sections (second contact sections) 135, which rise in an arc shape upward, are formed near the edge opposite the driver's seat 8 of the notch 132a in the bottom plate section 132. Each contact section 135 is provided at a position corresponding to the lower vibration-damping rubber 170, and as shown in FIGS. 19 and 20, makes contact along the outer periphery of the lower vibration-damping rubber 170. This allows for easy lateral positioning of the radiator core 120 relative to the heat exchanger frame 130. Each contact section 135 is connected to ensure strength. Additionally, an arc-shaped notch 137 (see FIG. 17) for inserting the pin 125a is formed inside each contact section 135 of the bottom plate section 132. The contact section 135 and the notch 137 have matching axes.

### (Lower Bracket)

As shown in FIGS. 17 and 18, the lower bracket 180 has a support section 181 extending in the longitudinal direction and a standing wall section 182 extending upward from the end of the support section 181 on the opening 80 side. A gripping section 183 extending toward the opening 80 side is formed at the upper central part of the standing wall section 182. Two contact sections (first contact sections) 185, which rise in an arc shape upward, are formed at the end opposite the standing wall section 182 of the support section 181. Each contact section 185 is provided at a position corresponding to the lower vibration-damping rubber 170, and as shown in FIGS. 19 and 20, makes contact along the outer periphery of the lower vibration-damping rubber 170. Each contact section 185 is connected to ensure strength. Additionally, an arc-shaped notch 187 for inserting the pin 125a is formed inside each contact section 185 of the support section 181. The contact section 185 and the notch 187 have matching axes. Therefore, the contact section 185 and the notch 187 are formed facing the contact section 135 and the notch 137 of the bottom plate section 132. Additionally, two guide members 190 extending toward the bottom plate section 132 side are mounted on the support section 181 beside each contact section 135. As shown in FIG. 20, the guide member 190 has a horizontal section 191 extending in the longitudinal direction on the support section 181 and an inclined section 192 extending obliquely upward from a slightly protruding position at the end of the support section 181.

The lower bracket 180 is inserted into the heat exchanger frame 130 from the opening 80 side such that the standing wall section 182 makes contact with the core holding section 134 of the heat exchanger frame 130 in the longitudinal direction, and the support section 181 is positioned below the heat exchanger frame 130. Then, the standing wall section 182 is fastened to the core holding section 134 with bolt B3 (see FIGS. 15, 19, and 20). As shown in FIG. 19, the lower bracket 180, with the standing wall section 182 fastened to the core holding section 134, has the support section 181 flush with the bottom plate section 132 of the heat exchanger frame 130, and the support section 181 makes contact with the lower surface of each lower vibration-damping rubber 170. Thus, each lower vibration-damping rubber 170 is supported from below by the lower bracket 180 and the bottom plate section 132. Thus, the lower bracket 180 supports the radiator core 120 against the heat exchanger frame 130 via the lower vibration-damping rubber 170.

As described above, the lower bracket 180 is formed as an L-shaped member consisting of the support section 181 and the standing wall section 182. As a result, the upright wall section 182 is made contact with the core holding section 134, and the support section 181 is made contact with the lower surface of the lower vibration-damping rubber 170, allowing the lower bracket 180 to be easily positioned and inserted into the heat exchanger frame 130 from the opening 80 side.

Additionally, the lower bracket 180 has contact sections 185 formed to makes contact along the outer periphery of the corresponding lower vibration-damping rubber 170. Thus, by inserting the lower bracket 180 into the heat exchanger frame 130 from the opening 80 side such that each contact section 185 makes contact with each lower vibration-damping rubber 170, the lateral positioning of the lower bracket 180 relative to each lower vibration-damping rubber 170 can be more easily accomplished. Additionally, after the lower bracket 180 is fastened to the core holding section 134, the contact section 185, together with the contact section 135 of the bottom plate section 132, clamps the lower vibration-damping rubber 170 in the longitudinal direction, thereby ensuring that the lower vibration-damping rubber 170 is stably held. It should be noted that the pin 125a through which the lower vibration-damping rubber 170 is inserted is designed not to interfere with the bottom plate section 132 or the lower bracket 180 through the notches 137, 197. That is, a gap (not shown) is formed between the pin 125a and the notches 137, 197.

Furthermore, as mentioned above, the guide member 190 is mounted on the support section 181 of the lower bracket 180. The guide member 190 is formed such that, when the lower bracket 180 is fastened to the core holding section 134, the horizontal section 191 contacts the bottom plate section 132 from above. As a result, after the lower bracket 180 is fastened to the core holding section 134, the lower bracket 180 is stably supported from below by the bottom plate section 132. Moreover, when inserting the lower bracket 180 into the heat exchanger frame 130 from the opening 80 side, even if the support section 181 is slightly misaligned downward relative to the bottom plate section 132, the inclined section 192 of the guide member 190 contacts the bottom plate section 132 from above, preventing significant deviation in the vertical positioning of the support section 181. Then, if the inclined section 192 of the lower bracket 180 is slid against the bottom plate section 132 and inserted in the longitudinal direction, the vertical positioning of the lower bracket 180 relative to the bottom plate section 132 can be achieved more easily.

Furthermore, as shown in Fig. 5, the heat exchanger 100 is positioned below the floor 11 where the driver's seat 8 is located, thereby ensuring visibility for the driver in the forward diagonal downward direction. In other words, the lower bracket 180 is positioned below the floor 11. In this embodiment, the lower bracket 180 has a grip section 183 and the guide member 190. Therefore, the worker can grip the grip section 183 and move the lower bracket 180 along the heat exchanger frame 130 using the guide member 190, making it easy to insert and remove the lower bracket 180 from the heat exchanger frame 130.

### (Procedure for Removing the Radiator Core)

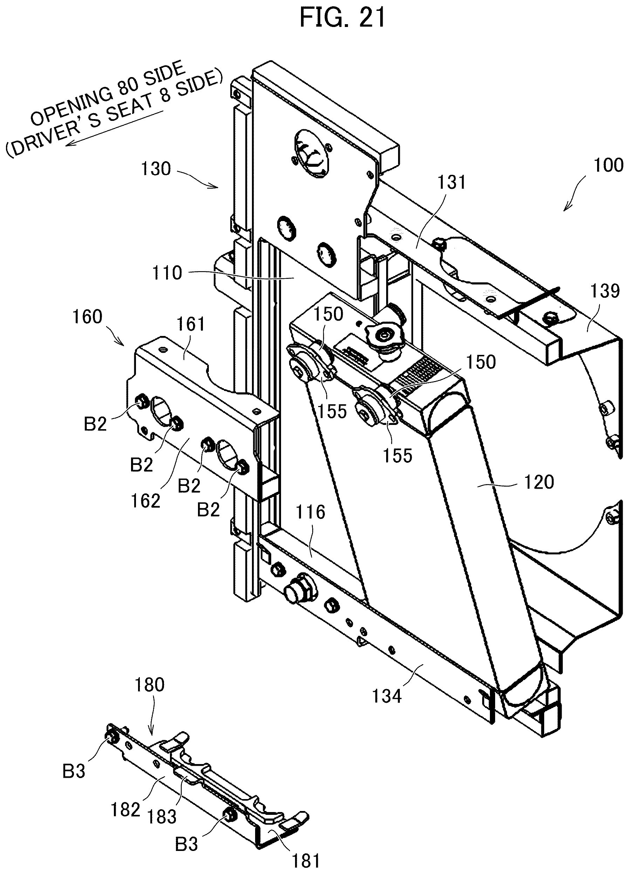

Fig. 21 is an exploded perspective view showing the process of removing the radiator core 120 from the heat exchanger frame 130. The removal work of the radiator core 120 is performed by removing components such as the front panel 18 in front of the driver's seat 8 and exposing the opening 80 of the vehicle body frame 2a towards the driver's seat 8. The worker releases the fastening of the upper bracket 160 and the upper plate section 131 of the heat exchanger frame 130 by the above-mentioned bolts B1 and B2, as well as the fastening of the upper bracket 160 and the holding member 155 of the upper vibration-damping rubber 150. As a result, as shown, it becomes possible to pull out and remove the upper bracket 160 from the heat exchanger frame 130 and the radiator core 120 towards the opening 80. Additionally, the worker releases the fastening of the lower bracket 180 to the core holding part 134 using bolt B3. This allows the upper bracket 160 to be pulled out and removed from the heat exchanger frame 130 and the radiator core 120 towards the opening 80 side, as illustrated. Although not shown, the worker removes the frame member 114 and spacer 116 from the heat exchanger frame 130 after the above procedure.

As a result, the radiator core 120 is supported only from below by the bottom plate section 132 of the heat exchanger frame 130 via the lower vibration-damping rubber 170. The worker tilts the radiator core 120 to pull it out towards the opening 80, forming a gap between the radiator core 120 and the fan frame 139. As a result, by utilizing the gap, it becomes possible to remove hoses 122, 124 (see Fig. 19) from the radiator core 120. Once hoses 122, 124 are removed from the radiator core 120, there are no components restraining the radiator core 120, allowing it to be extracted from the heat exchanger frame 130. Note that the lower vibration-damping rubber 170 is freely fitted to pin 125a, and even when the radiator core 120 is removed from the heat exchanger frame 130, it remains attached to the radiator core 120. When attaching the radiator core 120 to the heat exchanger frame 130, the reverse of the above procedure should be executed.

As described above, in the embodiment of the tire roller 1A, the upper bracket 160 and lower bracket 180 are detachably attached to the heat exchanger frame 130 so as to face the opening 80 side of the vehicle body frame 2a attached on the opening 80 side. Therefore, even if the heat exchanger 100 is configured in such a way that it cannot be accessed from the side or below, the radiator core 120 can be easily attached to and detached from the heat exchanger frame 130 by accessing the heat exchanger 100 through the opening 80. Thus, it is possible to improve the efficiency of the attachment and detachment work of the radiator core 120 to the heat exchanger frame 130 without the worker having to crawl under the vehicle body 2 or disassemble the heat exchanger 100. Additionally, by using the upper bracket 160 and lower bracket 180 for attaching the radiator core 120 to the heat exchanger frame 130, it is possible to attach and detach only the radiator core 120 to and from the heat exchanger frame 130 without affecting the attachment state of the oil cooler 110 to the heat exchanger frame 130.

### (Effects of the Embodiment)

As described above, in the tire roller (compaction machine) 1A according to the embodiment, the heat exchanger 100 is positioned at the rear of the engine room 70 (equipment installation room), the cooling fan 26f is positioned in front of the heat exchanger 100, the engine 22 (prime mover) is positioned in front of the cooling fan 26f, the hydraulic pump 25 is positioned in front of the engine 22, and the upper surface 72 as a cover is formed to slope diagonally downward from the rear to the front of the engine room 70.

This configuration allows the cover (upper surface 72) of the engine room 70 to be inclined diagonally downward from the rear to the front without lowering the mounting position of the heat exchanger 100. As a result, it is possible to suppress the reduction in capacity of the water tank 30 positioned below the engine room 70 and ensure visibility for the driver in the forward diagonal downward direction of the vehicle body 2.

Additionally, the engine room 70 is equipped with an air cleaner 27 connected to the engine 22, and an intake duct 27d with one end connected to the air cleaner 27 and the other end forming the engine intake port 271d. The air cleaner 27 is positioned in front of the heat exchanger 100, and the engine intake port 271d of the intake duct 27d is positioned within the engine room 70 behind the front of the heat exchanger 100. This configuration prevents the air cleaner 27 from drawing in air heated by the heat exchanger 100, thereby improving the operational efficiency of the engine 22.

Additionally, the tire roller 1A comprise the maintenance footing 16 provided on the side of the engine room 70. The air cleaner 27 is positioned above the footing 16. This configuration allows the worker on the footing 16 to easily access the air cleaner 27.

Additionally, the engine room 70 has an exhaust port 65 as a through hole positioned in front of the engine 22, and is equipped with an aftertreatment device 28 for purifying engine exhaust, with one end connected to the aftertreatment device 28 and the other end forming the engine exhaust port 28b via exhaust pipe 28a. Furthermore, the aftertreatment device 28 is positioned in front of the engine 22, and the exhaust pipe 28a of the aftertreatment device 28 extends from the aftertreatment device 28 to the outside of the engine room 70 via the exhaust port 65 positioned in front of the engine 22. This configuration allows the length of the exhaust pipe 28a to be shortened, improving yield and safety. Additionally, compared to when the aftertreatment device 28 is positioned on the driver's seat 8 side, it is possible to reduce hot air and noise near the driver's seat 8.

The third bottom surface section 71c (bottom surface) of the engine room 70 extends horizontally, and an opening 41a is provided in front of the vehicle body frame 2a. The water tank 30 is formed of resin and is detachable from the vehicle body frame 2a via the opening 41a. With this configuration, even if a separate resin tank from the vehicle body frame 2a is used as the water tank 30 (first tank 31), the water tank 30 can be shaped to extend horizontally similar to the third bottom surface section 71c, allowing it to be inserted and removed (attached and detached) within the vehicle body frame 2a through the opening 41a.

Additionally, in the tire roller (compaction machine) 1A according to the embodiment, a first intake port 61 (intake port) is formed on the driver's seat 8 side of the engine room 70 (equipment installation room) to draw air from outside the vehicle body frame 2a into the engine room 70 by driving the cooling fan 26f. Additionally, an exhaust port 65 is formed on the lower surface (second bottom surface section 71b) of the front part of the engine room 70 to discharge air that has passed through the heat exchanger 100 to the outside of the vehicle body frame 2a by driving the cooling fan 26f.

For example, in a configuration where the heat exchanger 100 is positioned on the front side of the engine room 70 as shown in the comparative example (Fig. 6), air is drawn into the heat exchanger 1 from the upper surface of the vehicle body frame 2a and the lower surface forming the tire house, and the air flows towards the rear. However, if the warmed air that has passed through the heat exchanger 100 flows backward, the hot air may flow near the driver's seat 8, causing the driver to feel hot. In the configuration of the tire roller 1A in this embodiment, air drawn in from the first intake port 61 flows forward within the engine room 70 and is discharged from the exhaust port 65 after passing through the heat exchanger 100. This can prevent hot air from flowing near the driver's seat 8.

Additionally, the vehicle body frame 2a is equipped with a front rolling wheel 3f positioned in front of the driver's seat 8, and the exhaust port 65 is positioned behind the front rolling wheel 3f. This configuration allows for better suppression of clogging of the air holes 55 by foreign matter and the intrusion of foreign matter into the vehicle body frame 2a.

Additionally, the tire roller 1A comprise the exhaust port cover 50 that is attached to the vehicle body frame 2a and covers the exhaust port 65. The exhaust port 65 includes multiple air holes 55 that connect the outside of the vehicle body frame 2a with the inside of the engine room 70, and multiple guide vanes 56 that direct the air discharged from the air holes 55 towards the rear. That is, a guide vane 56 is interposed between the air hole 55 and the front rolling wheel 3f, so the air hole 55 is not configured to open directly towards the front rolling wheel 3f. With this configuration, it is possible to exhaust air from the engine room 70 through multiple air holes 55 while preventing foreign objects from entering the engine room 70 through the exhaust port 65. Additionally, the guide vane 56 can better prevent the clogging of the air hole 55 by foreign matter and the intrusion of foreign matter into the vehicle body frame 2a.

Additionally, the equipment installed in the engine room 70 includes the hydraulic pump 25 (first device) that is fixed within the engine room 70 and at least part of which is exposed outside the vehicle body frame 2a from the exhaust port 65. The exhaust port cover 50 is provided to cover the part of the hydraulic pump 25 that is exposed outside the vehicle body frame 2a from the exhaust port 65. This configuration allows the hydraulic pump 25, which is partially exposed outside the vehicle body frame 2a, to be protected by the exhaust port cover 50.

On the left side 2b and right side 2c of the vehicle body frame 2a, a second air intake 62 and a third air intake 63 (second air intake) are formed, and outside the vehicle body frame 2a from the second air intake 62 and third air intake 63, steps 12a and 12b for boarding and alighting the driver's seat 8 are attached. This configuration allows for sufficient intake air volume into the engine room 70 while preventing the intrusion of foreign matter into the second air intake 62 and third air intake 63.

Additionally, a shielding plate 19 is provided on the vehicle body frame 2a, positioned between the first air intake 61 and the driver's seat 8, with the shielding plate 19 spaced apart from the first air intake 61 in the longitudinal direction. This configuration prevents the driver's feet seated in the driver's seat 8 from interfering with the first air intake 61 while not obstructing the intake through the first air intake 61.

This concludes the description of the embodiment, but the aspects of the present invention are not limited to this embodiment. For example, the compaction machine may be a vibrating roller, macadam roller, tamping roller, or the like. Additionally, the compaction machinery may use a prime mover different from the engine 22, such as an electric motor, and the engine room 70 can be any equipment installation room that installs these devices.

### Explanation of Reference Signs

- 1A, 1B: Tire roller (compaction machine)
- 2: Vehicle body
- 2a: Vehicle body frame
- 8: Driver's seat
- 13: Water spraying device
- 16: Footing
- 22: Engine (prime mover)
- 25: Hydraulic pump
- 26: Cooling device
- 26f: Cooling fan
- 27: Air cleaner
- 27d: Intake duct
- 271d: Engine air intake
- 28: Aftertreatment device
- 28a: Exhaust pipe
- 30: Water tank
- 31: First tank
- 32: Second tank
- 33: Third tank
- 65: Exhaust port
- 70: Engine room (equipment installation room)
- 71: Bottom surface
- 71a: First bottom section
- 71b: Second bottom section
- 71c: Third bottom section (bottom surface)
- 100: Heat exchanger

## Claims

1. A compaction machine comprising;
a driver's seat mounted on a vehicle body frame, an equipment installation room located in front of the driver's seat, a cover covering the top of the equipment installation room, and a water tank located below the equipment installation room for storing water;
the equipment installation room is equipped with a hydraulic pump, a prime mover for driving the hydraulic pump, and a cooling device for the prime mover;
the cooling device includes a heat exchanger and a cooling fan that generates cooling air flowing from the rear to the front of the equipment installation room;
the heat exchanger is positioned at the rear of the equipment installation room, the cooling fan is positioned in front of the heat exchanger, the prime mover is positioned in front of the cooling fan, the hydraulic pump is positioned in front of the prime mover, and the cover is formed to incline diagonally downward from the rear to the front of the equipment installation room.

2. The compaction machine according to claim 1;
wherein the prime mover is an engine, and the equipment installation room is provided with an air cleaner connected to the engine and an intake duct with one end connected to the air cleaner and the other end forming an engine intake port;
the air cleaner is positioned in front of the heat exchanger, and the engine intake port of the intake duct is provided in the equipment installation room behind the front of the heat exchanger.

3. The compaction machine according to claim 2, comprising a maintenance footing provided on the side of the equipment installation room;
wherein the air cleaner is positioned above the footing.

4. The compaction machine according to claim 1;
wherein the prime mover is an engine, and the equipment installation room has a through hole provided in front of the engine;
the equipment installation room is equipped with an aftertreatment device for purifying the exhaust of the engine and an exhaust pipe with one end connected to the aftertreatment device and the other end forming an engine exhaust port;
the aftertreatment device is positioned in front of the engine, and the exhaust pipe of the aftertreatment device extends from the aftertreatment device to the outside of the equipment installation room through the through hole provided in front of the engine.

5. The compaction machine according to claim 1;
wherein the bottom surface of the equipment installation room extends horizontally, an opening is provided in front of the vehicle body frame, and the water tank is formed of resin and is detachable from the vehicle body frame through the opening.

6. The compaction machine according to claim 1;
wherein on the driver's seat side of the equipment installation room, an intake port is formed to draw air from outside the vehicle body frame into the equipment installation room by driving the cooling fan;
on the lower surface of the front part of the equipment installation room, an exhaust port is formed to discharge air that has passed through the heat exchanger to the outside of the vehicle body frame by driving the cooling fan.

7. The compaction machine according to claim 6;
wherein a front rolling wheel positioned in front of the driver's seat is attached to the vehicle body frame,
the exhaust port is positioned behind the front rolling wheel.

8. The compaction machine according to claim 7, comprising an exhaust port cover that is attached to the vehicle body frame and covers the exhaust port;
wherein the exhaust port cover has multiple air holes that communicate between the outside of the vehicle body frame and the inside of the equipment installation room, and multiple guide vanes that direct the air discharged from the air holes rearward.

9. The compaction machine according to claim 6, comprising an exhaust port cover that is attached to the vehicle body frame and covers the exhaust port;
wherein the equipment housed in the equipment installation room includes a first device that is fixed within the equipment installation room and at least part of which is exposed outside the vehicle body frame from the exhaust port;
the exhaust port cover is provided to cover the part of the first device that is exposed outside the vehicle body frame from the exhaust port.
